(19) Europäisches Patentamt

European Patent Office

Office européen des brevets

(11) EP 4 628 858 A1

(12) EUROPEAN PATENT APPLICATION

(43) Date of publication:
08.10.2025 Bulletin 2025/41

(21) Application number: 24168842.3

(22) Date of filing: 05.04.2024

(51) International Patent Classification (IPC):
G01J 3/45 (2006.01)   G01J 3/02 (2006.01)

(52) Cooperative Patent Classification (CPC):
G01J 3/45; G01J 3/0297; G01J 3/453;
G01J 3/4535; G01N 2021/3595

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Thermo Electron Scientific
Instruments LLC
Madison WI 53711 (US)

(72) Inventors:
• IVERSON, John
Madison, WI 53711 (US)
• RITTER, Gary
Madison, WI 53711 (US)
• KNUDTSON, Peter
Madison, WI 53711 (US)
• SCHWARTZ, Eric
Madison, WI 53711 (US)

(74) Representative: Boult Wade Tennant LLP
Salisbury Square House
8 Salisbury Square
London EC4Y 8AP (GB)

(54) **REFERENCE METHOD FOR SPECTROMETER**

(57)   Interfering internal beams can be used to generate an internal reference interferogram. This interferogram can be used to compensate for changes in FTIR instrument performance in response to variable environmental conditions or other instrument variations. Acquisition of such internal interferograms can be done during, after, or prior to acquisition of actual sample data.

FIG. 1

EP 4 628 858 A1

## Description

## FIELD

The disclosure pertains to Fourier transform spectroscopy.

## BACKGROUND

Fourier transform infrared spectroscopy (FTIR) is a valuable tool for the assessment of many materials. In FTIR spectroscopy, samples are exposed to interfering optical beams in order to record an interferogram. The interferogram is Fourier transformed to obtain a spectrum associated with the sample. Unfortunately, in many cases, the FTIR instrument changes its spectral response over time in response to varying conditions such as ambient temperature, pressure, humidity, or other disturbances. Generally, a technician using such an instrument is required to halt interferogram acquisition in order to recalibrate to eliminate or reduce artifacts introduced by the instrument itself as result of these varying conditions. Such recalibration not only requires skilled operator intervention but increases measurement time and complexity. Improved approaches are needed that permit the compensation of instrument induced artifacts without operator invention or without requiring an operator to cease data acquisition of intended data.

## SUMMARY

Interfering beams within an FTIR can be used to produce interferograms that permit compensation of acquired FTIR spectral data, typically in response to changes in the FTIR instrument or its environment. These internal interferograms can be acquired before, during, or after acquisition of sample interferograms. These interfering internal beams can be based on portions of internal beams reflected back toward a beam source or as portions of beams intended to be directed outside of the instrument toward a sample of interest.

The foregoing and other features and advantages of the disclosure will become more apparent from the following detailed description, which proceeds with reference to the accompanying figures.

## BRIEF DESCRIPTION OF THE DRAWINGS

FIG. 1 illustrates a portion of a representative FTIR spectrometer.
FIG. 2 illustrates a representative FTIR method using internal spectra.
FIG. 3 illustrates portions of a representative FTIR spectrometer.
FIG. 4 illustrates a representative FTIR spectrometer.

FIG. 5 illustrates a representative FTIR method using internal reference scans.
FIG. 6 illustrates portions of a representative FTIR spectrometer that includes a single detector for use in sample and internal reference scans.
FIG. 7 illustrates a representative processing system and environment for FTIR instrument control, data processing and storage, and spectral display.

## DETAILED DESCRIPTION

*General Terminology*

As used herein, "beam" or "optical beam" refers to propagating electromagnetic radiation at one or more wavelengths, typically between 100 nm and 100 $\mu$m, 200 nm and 50 $\mu$m, 500 nm and 25 $\mu$m, or 1 $\mu$m and 10 $\mu$m. Such beams can be collimated, uncollimated, focused, defocused, or otherwise shaped.

A "scan" refers to production a range of optical path differences between optical beams to produce interference; in some examples, a source beam is divided into two portions and scanning is based on varying the optical path length in just one of the two portions. However, the optical path length of one or both beams can be varied. Scans can produce optical path lengths and differences that can be continuous or stepped. Instruments that produce interfering beams by varying an optical path difference between the interfering beams are referred to generally as scannable interferometers. In typical Michelson-interferometer based systems, optical path difference is established by translation of a reflector associated with one of two beam portions while the other beam portion is directed to a fixed reflector. In some cases, both reflectors can be translated and/or rotated to establish the optical path difference and maintain beam overlap to produced interference. Path length differences produced by an interferometer in a scan are typically measured using interference of beam portions produced with a diode laser, gas laser, or other laser, generally at a wavelength less than wavelengths of interest and at an associated detector. Such sources and detectors are referred to herein for convenience as timing sources and timing detectors as they can be used to establish optical path difference as a function of time during a scan.

As used herein, an interferogram is a detected and/or recorded detector signal associated with a scan as a function of optical path length. A detector signal can be associated with a varying current, voltage, or resistance or combination thereof and includes processed signals such as amplified, buffered, digitized, filtered, or other processed signals based on a scan. In some examples, detectors are shown without an associated amplifier, but amplifiers are generally included. For convenient explanation, scans are referred to as sample scans, sample reference scans, or internal reference scans. A sample scan is associated with acquisition of an interferogram from a sample to be evaluated, a sample reference scan is associated with acquisition of an interferogram associated with a reference sample, and an internal reference scan is associated with acquisition of an internal reference interferogram associated with the scanning interferometer and not a sample or reference sample. An internal reference scan is typically used to compensate for variations in interfering beams produced by the scanning interferometer that are independent of samples. Scan data refers generally to signal values associated with interfering optical beam as received from detectors, typically as a series of digital values. This series of digital values is typically stored as a function of optical path difference to form an interferogram. Interfering beams directed to a sample or received from a sample are reference to as interfering measurement beams; in some cases, interfering beams received from a sample are referred to as interfering sample beams.

Interfering beams produced by a scanning interferometer can be referred to as first interfering and second interfering beams, at least one of which is subject to variation in optical path length. Interfering optical beams directed to a sample, a reference sample, or an internal reference detector are referred to herein as interfering measurement beams, interfering reference measurement beams, or interfering internal beams for convenient explanation. Portions of interfering measurement beams returned after interaction with a sample and portions of interfering reference measurement beams returned from a reference sample are referred to herein as interfering sample beams and interfering reference sample beams, respectively. In some cases, portions of some of these interfering beams and used for both samples (or reference samples) and internal reference scans.

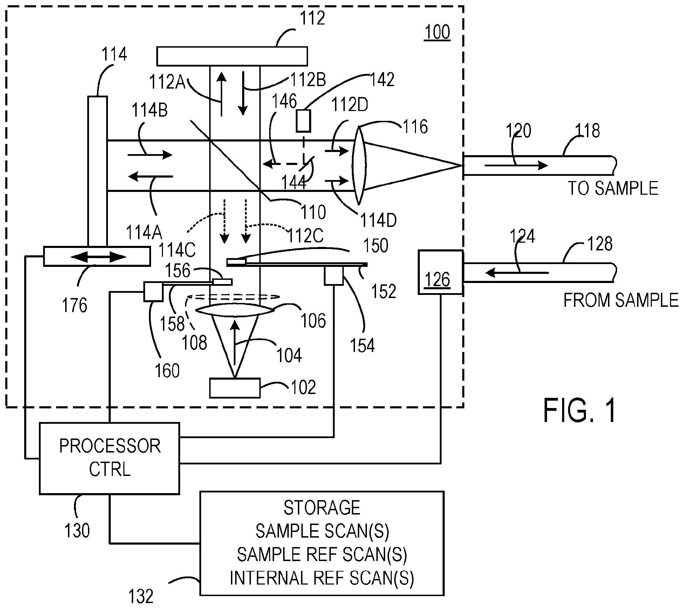

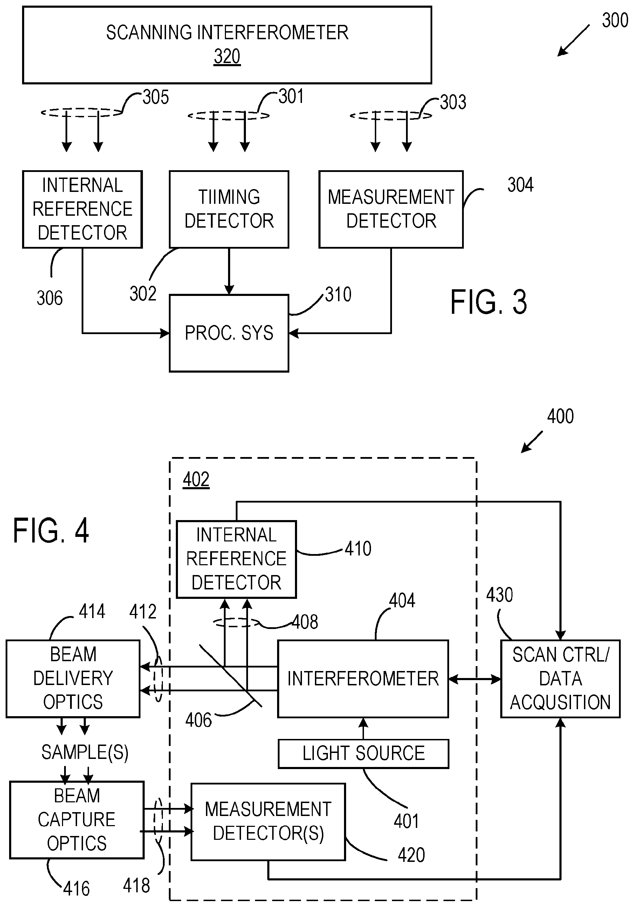

The interfering internal beams may be a portion of the interfering optical beams (e.g., collimated and modulated beams) formed by the interferometer. The interfering internal beam may be collected while the accessory (such as probe) is attached to the system. The interfering internal beams may be a portion of the modulated beams reflected back to the optical source of the interferometer (as shown in FIG. 1). Alternatively, the interfering internal beams may be a portion of the modulated beams directed towards the sample (as shown in FIG. 4). The interfering internal beam may be sampled, and Fourier transformed to form an instrument background and used to correct the received interfering sample beams. Since the instrument background and the sample signals are measured over a different path in the instrument, a correction factor may be applied to the instrument background so that the detectors for receiving the interfering sample beams and the interfering internal beams have a matching response curve. The instrument background obtained based on the interfering internal beams reflects the path variations and other changes associated with the interferometer and the attached accessory.

Scans generally produce interferograms based on intensities of interfering beams as a function of optical path difference between the interfering beams. As noted above, the optical path differences are generally obtained by recording interference of interfering timing beams obtained by scanning. Interferometer scans can be continuous or stepped, and interferograms can be recorded as analog values or as a series of samples. Spectra are obtained as Fourier transforms of interferograms, typically using a processor or other digital processing device that implements a fast Fourier transform (FFT).

In practical examples, a scanning interferometer is provided with a timing laser that provides a timing beam used to determine interfering beam optical path differences. The timing laser generally provides a beam at a wavelength shorter than wavelengths associated with sample spectra to be obtained. Diode lasers or other lasers producing beams at wavelengths less than 1 $\mu m$ are typically used, but other types of lasers or wavelengths can be used. A timing detector suitable for the timing wavelength beams is used to record the interfering. These interfering timing beams follow optical paths corresponding to the optical paths associated with measurement beams but in many cases, only portions of beam optical elements such as beam splitters, reflectors, or prisms are used or adapted (such as including suitable optical coatings) to such beams. Zero crossings of timing beam interference are commonly used to identify optical path differences for which interferogram data is to be recorded but data can be recorded at other intervals, and optical path differences for any scan time determined after scanning based on a timing interferogram.

In the drawings, beam propagation directions are shown with arrows. For convenient illustration, arrows associated with beams having overlapping cross sections may be shown as displaced, but it will be appreciated that beam overlap is needed for interference. Beam paths can be bent or folded using lenses, prisms, mirrors, or other optical elements and propagation along a straight axis is not required. Reflectors can be mirrors with dielectric, metallic, holographic, or other reflective structures. Beam splitters can include partially transmitting elements such as metallic or dielectric coatings, including polarization dependent elements. Focus elements are shown as single lens elements (singlets) in some cases, but compound lenses can be used as well as reflective (catoptric) optics or combinations of reflective and refractive optics (catadioptric). Optical materials, beam sources and optical detectors can be selected based on wavelength of interest. In the examples, interfering beams are shown as produced with Michelson interferometers, but other interferometers can be used.

*Example 1*

Referring to FIG. 1, a representative FTIR system 100 includes a beam source 102 situated to direct a beam in a direction 104 toward a beam shaping lens 106 which is generally situated to produce a collimated beam 108 that is directed to a beam splitter 110. The beam splitter 110 directs a portion of the collimated beam 108 in direction 114A to a reflector 114 that is coupled to a translation stage 176. The reflector 114 returns a reflected portion of the beam back to the beam splitter 110 along a direction 114B and the beam splitter 110 then produces beam portions along a direction 114C toward the beam source and direction 114D toward an output lens 116. Similarly, the beam splitter 110 directs a portion of the collimated beam 108 in direction 112A to a reflector 112 that is shown as a fixed reflector. The reflector 112 returns a reflected portion of the beam back to the beam splitter 110 along a direction 112B and the beam splitter 110 then produces beam portions along a direction 112C toward the beam source and direction 112D toward the output lens 116. Either or both of the reflectors 112,114 can be translatable and/or tiltable to control beam overlap and optical path differences but in this example, only the reflector 114 is coupled to a translation stage 176 for scanning.

The beams from the reflectors 112, 114 propagating along directions 112C, 114C toward the beam source 102 produce optical interference and are referred to as interfering internal beams. The interference of these beams is indicative of optical path length variations that are internal to the FTIR system 100 and are unrelated to samples under measurement. This interference can be used to compensate sample spectral measurements. For example, path length variations can be associated with environmental conditions in which the FTIR system 100 is situated. The beams from the reflectors 112, 114 along directions 112D, 114D toward the output lens 116 produce optical interference and are referred to as interfering measurement beams and are directed by the output lens 116 to an optical system that directs these beams to a sample. As shown, this optical system includes an optical fiber 118 and the interfering measurement beams propagate along a direction 120 in the optical fiber 120. After interaction with one or more samples, portions of the interfering measurement beams propagating in a direction 124 (i.e., interfering sample beams) in an optical fiber 128 and are coupled to a measurement detector 126. While optical fibers are shown, free space optics such as lenses, mirrors, prisms of other guided wave or unguided optics can be used. The interfering sample beams incident to the measurement detector 126 generate a measurement signal associated with optical interference produced with the sample. The measurement signal is coupled to a processing system 130 that can record scan data (such as interferograms associated with interfering internal beams, sample beams, and timing beams) and process as needed, typically using an FFT to produce a sample spectrum. Scan data (such as interferograms) and spectra can be stored in a storage device 132 that is in communication with the processing system 130.

A timing beam source 142 is situated to direct a timing beam to a reflector 144 to produce a timing beam that propagates in a direction 146 toward the beam splitter 110. Portions of the timing beam are directed to and reflected at reflectors 112, 114 back to the beam splitter 110 to produce interfering timing beams that are reflected to a timing detector 150. Other interfering timing beams are transmitted by the beam splitter 110. The timing detector 150 produces a timing signal responsive to interference of the interfering timing beams. The timing signal can be used so that the electrical signal associated with the sample from the measurement detector 126 is digitized and stored for optical path differences associated with minima in timing beam interference. Other portions of the timing signal can be used such as interference maxima and the selection and digitization of the measurement signal can be done during scanning or after scan completion. In one example, the timing detector 150 can be situated in the beam 108 to block a portion of the beam 108. In another example, the timing detector 150 is situated outside of the beam 108. A reflector may be used to redirect the interfering timing beams towards the timing detector. Attenuation of the beam 108 can be reduced using a dichroic reflector that transmits the beam 108. The reflector 144 and timing detector 150 can be selected so that the desired interfering measurement beams are substantially unattenuated, with losses of less than 1%, 5%, 10%, or 20%.

The timing detector is situated on a support 152 such as a circuit board 154 on which a detector amplifier 154 is secured and the timing signal coupled to the processing system 130 which can be configured to digitize and store the timing signal in the storage device 132. Alternatively, the detector amplifier 154 can be included in the processing system 130 or situated elsewhere.

The interfering internal beams are directed to an internal reference detector 156 that is situated on a support 158 such as a circuit board that includes a photodetector amplifier 160. As shown, the internal reference detector 156 blocks a portion of the beam 108 but the attenuation can be insubstantial. The internal reference detector 156 and the photodetector amplifier 160 produce an internal reference signal responsive to the interfering internal beams. The internal reference signal is coupled to the processing system 130 for recording in the storage device 132.

The processing system 130 is coupled to the translation stage 116 to vary optical path differences and to receive the measurement signal, the timing signal, and the internal reference signal from the respective detectors and photodetector amplifiers to produce sample scans and internal reference scans. The internal reference signal reflects path variations and other changes associated with the interferometer formed by the reflectors 112, 114 and the beam splitter 110 and the associated internal scan can be used to compensate sample scans to reduce or eliminate artifacts in sample spectra. Because the internal reference signal uses internal beams and an associated detector, internal reference scans can be obtained before, during, and after acquisition of actual sample scans. The internal reference scan can be obtained with or without sample coupled to the FTIR system. Combining scan data from measurement scans, timing scans, and internal reference scans permits reconstruction of interference of the sample, which can be stored in the storage 132.

In typical examples, the scannable interferometer is a Michelson interferometer that includes a first reflector and a second reflector, wherein at least one of the first reflector and the second reflector is scannable. A beam splitter is situated to direct a first portion of a source optical beam to the first reflector and a second portion of the source optical beam to the second reflector and receive a reflected first portion of the source optical beam from the first reflector and the reflected second portion of the source optical beam from the second reflector and produce interfering measurement beams directed to the sample and interfering internal beams directed towards an optical source

*Example 2*

Sample interferograms (e.g., generated based on signals received by measurement detector 126) can be represented as a series of intensity values $I_S$ as a function of optical path difference *OPD,* i.e., as $I_S(OPD).$ As discussed above, values of *OPD* can be obtained using interfering timing beams. Values of intensity correspond to signals produced with the associated detector, generally as coupled to an analog-to-digital convertor (ADC) and stored in a memory as a series of digital values. Using such an interferogram, a sample spectrum can be obtained as $F_S(I_S),$ wherein F denotes a Fourier transform, usually implemented as an FFT. Interferograms and spectra associated with reference samples can be similarly represented as $I_{RS}(OPD)$ and $F_{RS}(I_{RS}).$ Internal reference interferograms and spectra can be represented as a series of intensity values $I_{IR}(OPD)$ and $F_{IR}(I_{IR}).$ One or more internal reference interferograms $I_{IR}(OPD)$ can be obtained, and multiple internal reference interferograms $I_{IR}(OPD)$s can be averaged. In some cases, only small portions of a source beam are used to produce interfering internal reference beams so that interferogram signal to noise ratio is low and averaging can be beneficial. One or more internal reference interferograms $I_{IR}(OPD)$s can be Fourier transformed to produce corresponding internal reference spectra $F_{IR}(I_{IR})$; compensated sample spectra can be produced as a ratio $F_S(I_S)/F_{IR}(I_{IR}).$ The internal reference spectra used can be an average spectra $F_{IR-AVE}$ based on multiple acquired internal reference spectra or a spectrum based on an average of multiple internal reference interferograms, i.e., $F_{IR}(I_{IR-AVE}).$ Alternatively, the ratios $F_S(I_S)/F_{IR}(I_{IR})$ can be averaged.

In a representative example, sample spectra are corrected using a Fourier transform $F_{openbeam}$ of an interferogram obtained without a sample (referred to here for convenience as an "Open Beam" spectrum), typically obtained with installation of an optical system used to direct beams to and from a sample, but without a sample present; a Fourier transform $F_{int,ref}$ of an initial internal reference interferogram (referred to here also as a reference background measurement) typically acquired at the same time or under the same conditions at which the open beam interferogram is obtained; and a Fourier transform $F_{int}$ of a subsequent internal reference interferogram, typically obtained at or near the time of acquisition of sample data to correct or compensate instrument changes after obtaining $F_{int,ref}.$ A sample spectrum $F_{sample,\ unc}$ obtained from a sample interferogram without correction can be corrected as follows to produce a corrected sample spectrum $F_{sample,\ cor}$:

$$F_{sample,cor} = \frac{F_{sample,unc}}{F_{openbeam}} \times \frac{F_{int,ref}}{F_{int}},$$

which can be rewritten as:

$$F_{sample,cor} = R \frac{F_{sample,unc}}{F_{openbeam}},$$

wherein $R = \frac{F_{int,ref}}{F_{int}}$. Note that the open beam interferogram is typically produced under the same conditions at which the internal reference interferogram is obtained, and further internal correction is needed only to compensate internal drift or other changes from these conditions. In the absence of any instrument changes, $R = 1$.

*Example 3*

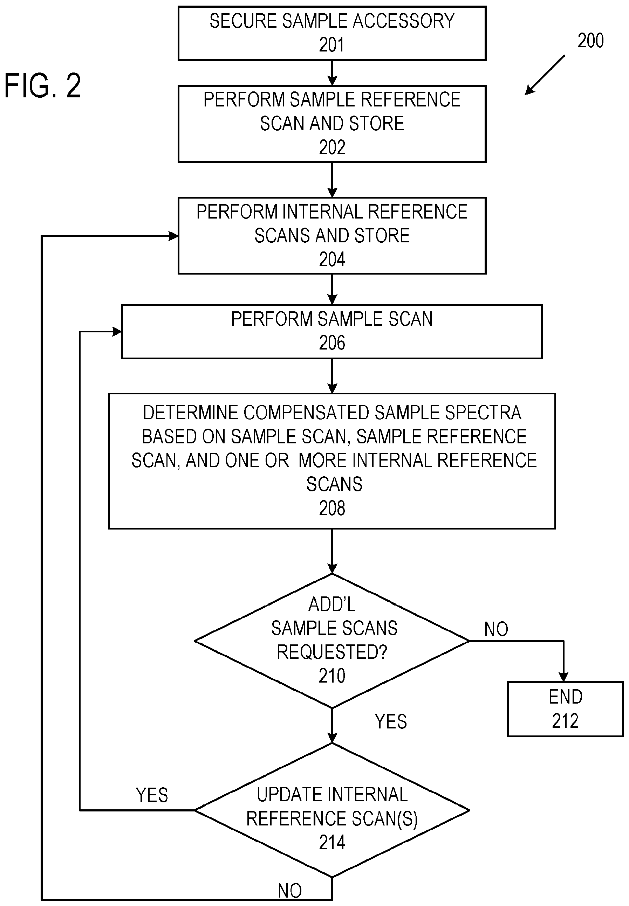

With reference to FIG. 2, a representative FTIR method 200 includes securing sample accessory of a scannable interferometer at 201. Such a sample accessory can include optical elements that deliver interfering beams to one or more samples and associated sample holders. A sample reference scan is optionally performed at 202 to obtain a reference interferogram using a reference standard, typically situated in a similar manner to samples of interest. The reference interferogram may be stored. At 204, an internal reference scan is performed to obtain and store one or more internal reference interferograms. Multiple internal reference interferograms can be obtained for averaging to improve signal to noise ratio if desired. The internal reference scan may be performed with or without the sample or the reference standard positioned at a measurement position for collecting spectral data. At 206, a sample scan is performed on a sample of interest to obtain and store a sample interferogram associated with the sample . Multiple sample interferograms can be obtained for averaging to improve signal to noise ratio, if desired. The sample reference scan may be performed with the internal reference scan simultaneously. In some examples, the interfering timing beams are acquired during the sample scan and/or the internal reference scan. In some examples, the interfering sample beams, the interfering internal beams, and the interfering timing beam are acquired simultaneously during the sample scan. At 208, compensated sample spectra are obtained based on the sample interferogram, and one or more of the reference interferogram , the interfering timing beams and the internal reference interferogram. Typically, each of the interferograms is Fourier transformed using an FFT implemented with a processor or other digital logic, and the sample spectra are compensated by adjusting frequency components based on the Fourier transformed interferograms. The sample spectra may be compensated as described in Example 2. If additional sample scans are to be obtained as determined at 210, it can also be determined if updated or additional internal references scans are to be obtained at 214, and such scans performed and internal reference interferograms stored at 204. If no internal reference scans are to be performed, additional sample scans are performed and stored at 206. Once all sample scans are complete, the method 200 ends at 212. In some cases, an FTIR apparatus is configured to occasionally or periodically perform internal reference scans and store the associated internal reference interferograms.

In some examples, the internal reference scan and the sample scan can be performed simultaneously. That is, the internal reference interferograms and the sample interferograms can be acquired and recorded at the same time.

*Example 4*

With reference to FIG. 3, a portion 300 of a representative FTIR system includes a timing detector 302 situated to receive interfering timing beams 301, a measurement detector 304 is situated to receive interfering sample beams 303 from a sample of interest, and an internal reference detector 306 is situated to receive interfering internal beams 305 produced with an FTIR source and a timing beam source by scanning an interferometer 320 to vary optical path length differences between the interfering beams. The detectors 302, 304, 306 are coupled to a processing system 310 so that optical path length differences can be determined. Interferograms are recorded and spectra are obtained using a Fourier transform and compensated based on interferograms associated with interfering beams incident to the internal reference detector 306.

*Example 5*

With reference to FIG. 4, a representative FTIR system 400 comprises an interferometer optical system 402 that includes a scannable interferometer 404 and a beam splitter 406 situated to deliver interfering internal beams 408 to an internal reference detector 410 based on an optical beam produced by light source 401. The beam splitter 406 also couples interfering measurement beams 412 to beam delivery optics 414 for delivery to a sample. Beam capture optics 416 are situated to receive interfering sample beams and direct the interfering sample beams 418 to a measurement detector 420. A scan control system 430 is coupled to receive interference signals from each the detectors 410, 420, record interferograms, produce one or more of sample spectra and internal reference spectra, and compensated sample spectra. The scan control system 430 can initiate interferogram acquisition and control interferometer scanning. In this example, the interfering internal beams 408 are obtained as portions of the interfering measurement beams 412 in contrast to the arrangement of FIG. 1 in which interfering internal beams are based on beam portions directed toward the FTIR source, and not toward a sample. In some examples, FTIR systems such as described herein are arranged to deliver interfering measurement beams to multiple samples and record multiple sample interferograms. In such examples, common internal reference interferograms can be used for compensation.

*Example 6*

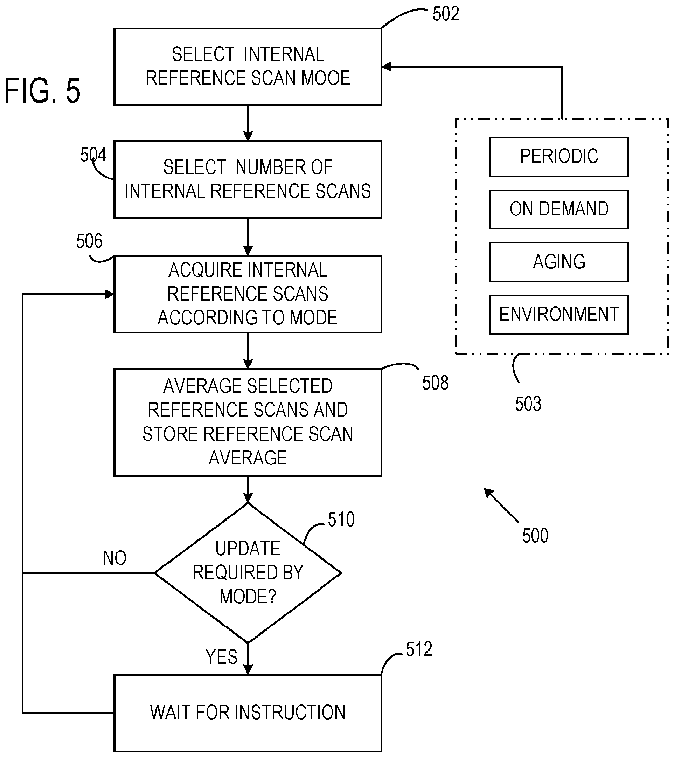

Referring to FIG. 5, a representative method 500 of internal reference based FTIR internal calibration includes selecting a particular internal reference scan mode at 502. As shown at 503, representative modes include periodic or on-demand internal reference interferogram acquisition, acquisition based on elapsed time ("aging"), environmental changes detected by temperature, pressure, humidity, or other sensors, or based on other considerations. At 504, a number of reference scans (and interferograms to be acquired) is selected. A period of acquisition or a time duration between scans can be selected, and regardless of a selected number of scans, acquisition can be discontinued if an average internal reference interferogram or average internal reference spectrum has a selected signal to noise ratio. At 506, the internal reference scans are conducted to obtain the associated interferograms based on the selected acquisition mode. At 508, the scans can be averaged to obtain one or more average interferograms or spectra, and the averages stored. At 510, previous internal reference scan averages can be updated, as required by the selected mode, for example, as a periodic update or to refresh or replace aged values. At 512, acquisition can pause until instructions are received to acquire internal reference interferograms again.

*Example 7*

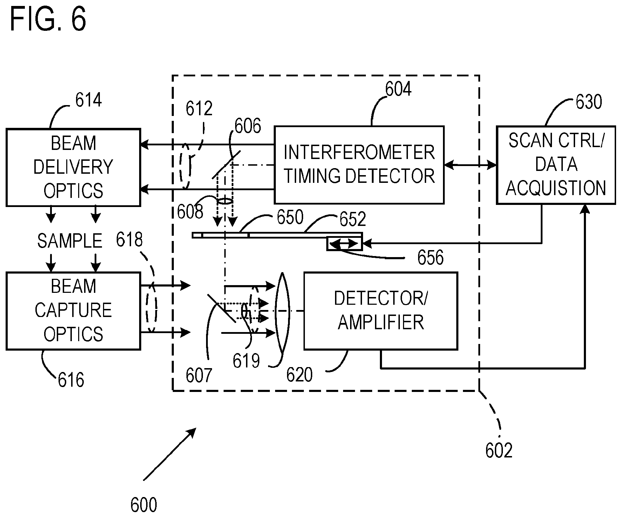

With reference to FIG. 6, a representative FTIR system 600 comprises an interferometer optical system 602 that includes a scannable interferometer 604 and a first beamsplitter 606 (or reflector) situated to deliver interfering internal beams 608 to a second beamsplitter 607 that directs the interfering internal beams 608 to a focusing lens 619 and then to a detector and amplifier 620. The interfering internal beams 608 are coupled through an aperture 650 defined in an aperture plate 652 to the second beamsplitter 607. The aperture plate 652 is secured to a translation stage 656 so that the aperture plate 652 can be positioned to transmit or block the interfering internal reference beams 608. A processing system 630 is coupled to the translation stage 656 and the scannable interferometer 604 so that the interfering internal beams 608 are transmitted to the detector 620 as needed to obtain internal reference interferograms. The first beam splitter 606 also couples interfering measurement beams 612 to beam delivery optics 614 for delivery to a sample. Beam capture optics 616 are situated to receive interfering sample beams 618 and direct the interfering sample beams 618 to the focusing lens 619 and the detector 620. During sample measurement, the aperture plate 652 is controlled by the processing system 630 to block the interfering internal beams 608 and the detector 620 is responsive only to the interfering sample beams 618. The processing system 630 is coupled to receive interference signals from the detectors 620 and record sample, reference, and internal reference interferograms. The processing system 630 can also produce compensated spectra based on the internal reference interferograms and the sample interferograms in addition to initiating sample and internal reference interferogram acquisition and the associated interferometer scanning. In the example of FIG. 6, a single detector is used for both internal reference and sample interferogram acquisition.

*Example 8*

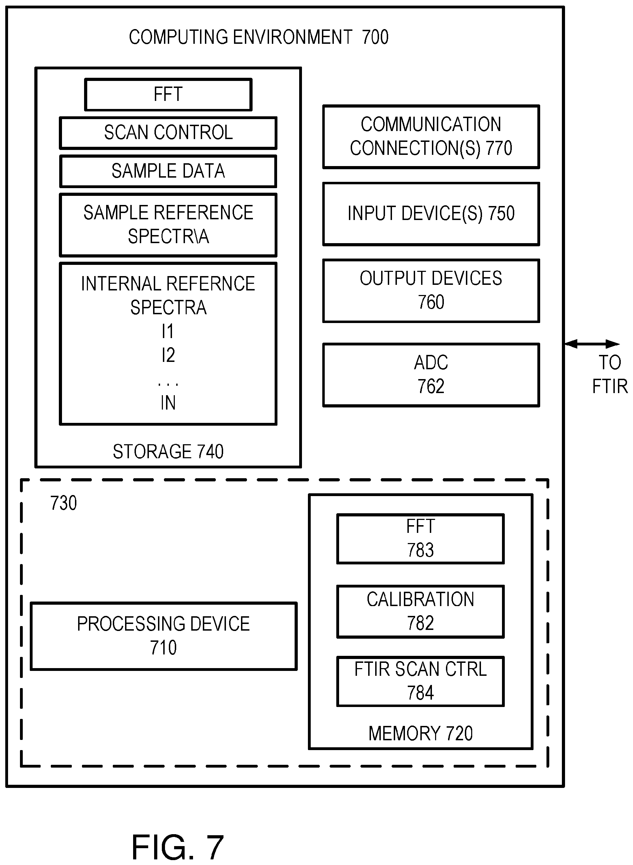

FIG. 7 illustrates a generalized example of a suitable computing environment 700 in which aspects of the described embodiments can be implemented. The computing environment 700 is not intended to suggest any limitation as to the scope of use or functionality of the disclosed technology, as the techniques and tools described herein can be implemented in diverse general-purpose or special-purpose environments that have computing hardware. Such a computing environment can control FTIR interferogram acquisition, including sample, reference sample, and internal reference scans, apply calibration and/or compensation to acquired spectra, and provide a user interface for operation input and data output.

With reference to FIG. 7, the computing environment 700 includes at least one processing device 710 and memory 720. In FIG. 7, a basic configuration 730 is included within a dashed line. The processing device 710 (*e.g.,* a CPU, microprocessor, ASIC, FPGA, PLD) executes computer-executable instructions. In a multi-processing system, multiple processing devices execute computer-executable instructions to increase processing power. The memory 720 may be volatile memory (*e.g.,* registers, cache, RAM, DRAM, SRAM), non-volatile memory (*e.g.,* ROM, EEPROM, flash memory), or some combination of the two. The memory 720 stores software implementing tools for performing any of the disclosed FTIR techniques as described herein. The memory 720 can also store processor executable instructions 783 for performing FFTs, processor executable instructions 782 for performing calibration using internal reference interferograms, and processor executable instructions 784 for initiating scans and acquiring scan data as well as a user interface for data input, output, and display.

The computing environment can have additional features. For example, the computing environment 700 includes storage 740, one or more input devices 750, one or more output devices 760, and one or more communication connections 770. An interconnection mechanism (not shown), such as a bus, controller, or network, interconnects the components of the computing environment 700. Typically, operating system software (not shown) provides an operating environment for other software executing in the computing environment 700, and coordinates activities of the components of the computing environment 700.

The storage 740 can be removable or non-removable, and includes one or more magnetic disks (e.g., hard drives), solid state drives (e.g., flash drives), or any other tangible non-volatile storage medium which can be used to store information, and which can be accessed within the computing environment 700. The storage 740 can also store the processor-executable instructions shown in the memory 720 and either or both of the memory 720 and the storage 740 can be used to store interferograms.

The input device(s) 750 can be a touch input device such as a keyboard, touchscreen, mouse, pen, trackball, a voice input device, a scanning device, or another device that provides input to the computing environment 700. The output device(s) 760 can be a display device (*e.g.,* a computer monitor, laptop display, smartphone display, tablet display, netbook display, or touchscreen), printer, speaker, or another device that provides output from the computing environment 700.

The computing environment 700 can also include one or more analog-to-digital convertors (ADCs) such as ADC 762 which can be coupled to various detectors to digitize scan data for storage.

The communication connection(s) 770 enable communication over a communication medium to another computing entity. The communication medium conveys information such as computer-executable instructions or other data in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

As used herein, computer-readable media include tangible computer-readable memory or storage devices, such as memory 720 and/or storage 740, and do not include propagating carrier waves or signals per se (tangible computer-readable memory or storage devices do not include propagating carrier waves or signals per.

*Additional Representative Embodiments*

Clause 1 is a Fourier transform spectrometer, including: a scannable interferometer; at least one detector situated to selectively receive interfering sample beams from a sample or interfering internal beams from the scannable interferometer; and a processor coupled to the at least one detector and operable to: record a sample interferogram based on the interfering sample beams received by the detector from the sample, record at least one internal reference interferogram based on the interfering internal beams, and produce a sample spectrum based on the sample interferogram and the at least one internal reference interferogram.

Clause 2 includes the subject matter of Clause 1, and further specifies that the processor is operable to record a plurality of internal reference interferograms based on the scanned interfering internal beams and produce the sample spectrum based on the sample interferogram and at least one of the plurality of internal reference interferograms.

Clause 3 includes the subject matter of any of Clauses 1-2, and further specifies that the processor is operable to record a plurality of internal reference interferograms based on the scanned interfering internal beams and produce the sample spectrum based on the sample interferogram and a combination of the plurality of internal reference interferograms.

Clause 4 includes the subject matter of any of Clauses 1-33, and further specifies that the combination of the plurality of internal reference interferograms is an average of the internal reference interferograms.

Clause 5 includes the subject matter of any of Clauses 1-4, and further specifies that the processor is operable to record a plurality of internal reference interferograms based on the scanned interfering internal beams and produce the sample spectrum based on a Fourier transform of the sample interferogram and a Fourier transform associated with the plurality of internal reference interferograms.

Clause 6 includes the subject matter of any of Clauses 1-5, and further specifies that the Fourier transform associated with the plurality of internal reference interferograms corresponds to a Fourier transform of an average of the plurality of internal reference interferograms or an average Fourier transform associated with the plurality of internal reference interferograms.

Clause 7 includes the subject matter of any of Clauses 1-6, and further specifies that the at least one detector comprises a measurement detector situated to receive the interfering sample beams from the sample and an internal reference detector situated to receive the interfering internal beams from the scannable interferometer.

Clause 8 includes the subject matter of any of Clauses 1-7, and further includes an optical source coupled to the scannable interferometer, wherein the interfering internal beams received by the at least one detector are directed toward the optical source.

Clause 9 includes the subject matter of any of Clauses 1-8, and further includes an optical source coupled to the scannable interferometer, wherein the interfering internal beams received by the at least one detector are directed are directed toward the sample.

Clause 10 includes the subject matter of any of Clauses 1-9, and further includes an optical source situated to provide a source optical beam to the scannable interferometer, wherein the internal reference detector is situated to occlude at least a portion of the optical source beam.

Clause 11 includes the subject matter of any of Clauses 1-10, and further includes an optical source situated to provide a source optical beam to the scannable interferometer, wherein the internal reference detector is situated to occlude at least a portion of interfering measurement beams directed towards the sample.

Clause 12 includes the subject matter of any of Clauses 1-11, and further includes: an optical source situated to provide a source optical beam to the scannable interferometer; and a reflector situated in interfering optical beams directed towards the sample to direct at least a portion of the interfering measurement beams to the internal reference detector.

Clause 13 includes the subject matter of any of Clauses 1-12, and further specifies that the scannable interferometer is a Michelson interferometer comprising: a first reflector and a second reflector, wherein at least one of the first reflector and the second reflector is scannable; and a beam splitter situated to: direct a first portion of a source optical beam to the first reflector and a second portion of the source optical beam to the second reflector, receive a reflected first portion of the source optical beam from the first reflector and the reflected second portion of the source optical beam from the second reflector and produce interfering measurement beams directed to the sample and interfering internal beams directed towards an optical source, wherein the at least one detector comprises a measurement detector situated to receive the interfering sample beams from the sample and an internal reference detector situated to receive the interfering internal beams from the scannable interferometer.

Clause 14 includes the subject matter of any of Clauses 1-13, and further specifies that the internal reference detector is situated to receive a portion of the interfering measurement beams directed towards the sample.

Clause 15 includes the subject matter of any of Clauses 1-14, and further specifies that the internal reference detector is situated to receive a portion of the interfering beams directed towards the optical source.

Clause 16 includes the subject matter of any of Clauses 1-15 and further includes a timing laser and a timing detector, wherein the timing laser is situated so that the scannable interferometer produces interfering timing beams that are directed to the timing detector, wherein the internal reference detector and the timing detector are fixed with respect to each other.

Clause 17 includes the subject matter of any of Clauses 1-16, and further includes a reflector situated to direct the interfering internal beams to the internal reference detector.

Clause 18 is a method, including: with a scannable interferometer, obtaining an interferogram associated with a sample; with the scannable interferometer, obtaining at least one internal reference interferogram associated with the scannable interferometer; and based on the interferogram associated with a sample and the at least one internal reference interferogram, determining a sample spectrum.

Clause 19 includes the subject matter of Clause 18, and further includes obtaining a plurality of internal reference interferograms, wherein variations in the internal reference interferograms are associated with one or more environmental changes associated with the scannable interferometer.

Clause 20 includes the subject matter of any of Clauses 18-19, and further specifies that the interferogram associated with the sample is based on interfering sample beams directed to a measurement detector and the at least one internal reference interferogram is associated with interfering internal beams directed to an internal reference detector.

Clause 21 includes the subject matter of any of Clauses 18-20, and further specifies that the interfering internal beams directed to the internal reference detector are portions of interfering measurement beams directed towards a sample or portions of interfering beams directed towards a beam source.

Clause 22 includes the subject matter of any of Clauses 18-21, and further specifies that the scannable interferometer is a Michelson interferometer that includes at least one scannable reflector.

In view of the many possible clauses to which the principles of the disclosed technology may be applied, it should be recognized that the illustrated clauses are only preferred examples and should not be taken as limiting the scope of the disclosure. We claim all that comes within the scope and spirit of the claims.

**Claims**

1. A Fourier transform spectrometer, comprising:

   a scannable interferometer;
   at least one detector situated to selectively receive interfering sample beams from the sample or interfering internal beams of the scannable interferometer; and
   a processor coupled to the at least one detector and operable to:

   record a sample interferogram based on the interfering sample beams,
   record at least one internal reference interferogram based on the interfering internal beams, and
   produce a sample spectrum based on the sample interferogram and the at least one internal reference interferogram.

2. The Fourier transform spectrometer of claim 1, wherein the processor is operable to record a plurality of internal reference interferograms based on the interfering internal beams and produce the sample spectrum based on the sample interferogram and at least one of the plurality of internal reference interferograms.

3. The Fourier transform spectrometer of any of claims 1-2, wherein the interfering internal beams of the scannable interferometer is a portion of interfering optical beams generated by the scannable interferometer.

4. The Fourier transform spectrometer of claim 3, wherein the at least one detector comprises a measurement detector situated to receive the interfering sample beams from the sample and an internal reference detector situated to receive the interfering internal beams from the scannable interferometer.

5. The Fourier transform spectrometer of claim 3, further comprising an optical source coupled to the scannable interferometer, wherein the interfering internal beams received by the at least one detector are directed toward the optical source.

6. The Fourier transform spectrometer of claim 5, wherein the optical source is situated to provide a source optical beam to the scannable interferometer, wherein the internal reference detector is situated to occlude at least a portion of the optical source beam.

7. The Fourier transform spectrometer of claim 3, further comprising an optical source coupled to the scannable interferometer, wherein the interfering internal beams received by the at least one detector are directed toward the sample.

8. The Fourier transform spectrometer of claim 7, wherein the optical source is situated to provide a source optical beam to the scannable interferometer, wherein the internal reference detector is situated to occlude at least a portion of interfering measurement beams directed towards the sample.

9.  The Fourier transform spectrometer of claim 3, further comprising:

    an optical source situated to provide a source optical beam to the scannable interferometer; and
    a reflector situated in interfering optical beams to direct at least a portion of the interfering measurement beams to the internal reference detector.

10. The Fourier transform spectrometer of any of claims 1-9, wherein the scannable interferometer is a Michelson interferometer, and wherein the at least one detector comprises a measurement detector situated to receive the interfering sample beams from the sample and an internal reference detector situated to receive the interfering internal beams from the scannable interferometer.

11. The Fourier transform spectrometer of claim 10, wherein the internal reference detector is situated to receive a portion of the interfering measurement beams directed towards the sample.

12. The Fourier transform spectrometer of claim 10, wherein the internal reference detector is situated to receive a portion of interfering optical beams directed towards the optical source.

13. The Fourier transform spectrometer of claim 1, further comprising a timing laser and a timing detector, wherein the timing laser is situated so that the scannable interferometer produces interfering timing beams that are directed to the timing detector, wherein the internal reference detector and the timing detector are fixed with respect to each other.

14. A method, comprising:

    with a scannable interferometer, obtaining an interferogram associated with a sample responsive to directing the sample with an interfering measurement beam;
    obtaining at least one internal reference interferogram associated with the scannable interferometer; and
    based on the interferogram associated with the sample and the at least one internal reference interferogram, determining a sample spectrum.

15. The method of claim 14, further comprising obtaining a plurality of internal reference interferograms, wherein variations in the internal reference interferograms are associated with one or more environmental changes associated with the scannable interferometer.

FIG. 1

FIG. 2

```
           ┌─────────────────────────────┐
           │  SECURE SAMPLE ACCESSORY    │            200
           │           201               │
           └─────────────┬───────────────┘
                         │
           ┌─────────────▼───────────────┐
           │  PERFORM SAMPLE REFERENCE   │
           │      SCAN AND STORE         │
           │           202               │
           └─────────────┬───────────────┘
                         │
           ┌─────────────▼───────────────┐
           │  PERFORM INTERNAL REFERENCE │
           │      SCANS AND STORE        │
           │           204               │
           └─────────────┬───────────────┘
                         │
           ┌─────────────▼───────────────┐
           │     PERFORM SAMPLE SCAN     │
           │           206               │
           └─────────────┬───────────────┘
                         │
           ┌─────────────▼───────────────┐
           │ DETERMINE COMPENSATED       │
           │ SAMPLE SPECTRA BASED ON     │
           │ SAMPLE SCAN, SAMPLE         │
           │ REFERENCE SCAN, AND ONE OR  │
           │ MORE INTERNAL REFERENCE     │
           │ SCANS                       │
           │           208               │
           └─────────────┬───────────────┘
```

DETERMINE COMPENSATED SAMPLE SPECTRA BASED ON SAMPLE SCAN, SAMPLE REFERENCE SCAN, AND ONE OR MORE INTERNAL REFERENCE SCANS
208

ADD'L SAMPLE SCANS REQUESTED?
210

NO

END
212

YES

UPDATE INTERNAL REFERENCE SCAN(S)
214

YES

NO

SCANNING INTERFEROMETER
320

300

305    301    303

304

INTERNAL
REFERENCE
DETECTOR

TIIMING
DETECTOR

MEASUREMENT
DETECTOR

306    302    310

PROC. SYS

FIG. 3

400

FIG. 4

402

INTERNAL
REFERENCE
DETECTOR    410

414    412

404

430

BEAM
DELIVERY
OPTICS

408

INTERFEROMETER

SCAN CTRL/
DATA
ACQUSITION

406

SAMPLE(S)

LIGHT SOURCE

BEAM
CAPTURE
OPTICS

MEASUREMENT
DETECTOR(S)

401

420

416    418

FIG. 5

SELECT INTERNAL REFERENCE SCAN MOOE — 502

SELECT NUMBER OF INTERNAL REFERENCE SCANS — 504

ACQUIRE INTERNAL REFERENCE SCANS ACCORDING TO MODE — 506

AVERAGE SELECTED REFERENCE SCANS AND STORE REFERENCE SCAN AVERAGE — 508

UPDATE REQUIRED BY MODE? — 510

NO

YES

WAIT FOR INSTRUCTION — 512

PERIODIC

ON DEMAND

AGING

ENVIRONMENT

503

500

FIG. 6

COMPUTING ENVIRONMENT  700

FFT

SCAN CONTROL

SAMPLE DATA

SAMPLE REFERENCE
SPECTR\A

INTERNAL REFERNCE
SPECTRA
I1
I2
. . .
IN

STORAGE 740

COMMUNICATION
CONNECTION(S) 770

INPUT DEVICE(S) 750

OUTPUT DEVICES
760

ADC
762

TO
FTIR

730

PROCESSING DEVICE
710

FFT
783

CALIBRATION
782

FTIR SCAN CTRL
784

MEMORY 720

FIG. 7

Europäisches
Patentamt

European
Patent Office

Office européen
des brevets

# EUROPEAN SEARCH REPORT

**Application Number**

EP 24 16 8842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/301939 A1 (MEDHAT MOSTAFA [EG] ET AL) 3 October 2019 (2019-10-03) | 1-12,14, 15 | INV. G01J3/45 G01J3/02 |
| Y | * figures 2, 5 * <br> * paragraphs [0007], [0045], [0046] * | 13 | |
| X | US 8 358 420 B1 (DEWITT KRISTIN MARIE [US] ET AL) 22 January 2013 (2013-01-22) <br> * figure 2 * <br> * column 8, line 10 - line 30 * | 1,14 | |
| X | WO 2023/275309 A2 (BRUKER OPTICS GMBH & CO KG [DE]) 5 January 2023 (2023-01-05) | 1,3-6, 13,14 | |
| Y | * figure 1 * | 13 | |

**TECHNICAL FIELDS SEARCHED (IPC)**

G01J

The present search report has been drawn up for all claims

| Place of search | Date of completion of the search | Examiner |
|---|---|---|
| Munich | 11 September 2024 | Parise, Berengere |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 8842

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2024

| Patent document cited in search report | | Publication date | Patent family member(s) | | Publication date |
|---|---|---|---|---|---|
| US 2019301939 | A1 | 03-10-2019 | CN 111936831 | A | 13-11-2020 |
| | | | EP 3775806 | A2 | 17-02-2021 |
| | | | JP 7511901 | B2 | 08-07-2024 |
| | | | JP 2021519413 | A | 10-08-2021 |
| | | | US 2019301939 | A1 | 03-10-2019 |
| | | | WO 2019191698 | A2 | 03-10-2019 |
| US 8358420 | B1 | 22-01-2013 | NONE | | |
| WO 2023275309 | A2 | 05-01-2023 | DE 102021206973 | A1 | 05-01-2023 |
| | | | EP 4363813 | A2 | 08-05-2024 |
| | | | WO 2023275309 | A2 | 05-01-2023 |

EPO FORM P0459

For more details about this annex : see Official Journal of the European Patent Office, No. 12/82